# EUROPEAN PATENT APPLICATION

(11) **EP 4 769 053 A1**
(43) Date of publication of application: **01.07.2026**
(21) Application number: 25218475.9
(22) Date of filing: 25.11.2025
(51) Int. Cl.: G05D 1/87, B60W 50/023, G05B 9/00

(54) **REDUNDANCY SYSTEM, DEVICE, STORAGE MEDIUM AND PROGRAM PRODUCT FOR AUTONOMOUS VEHICLE**

(30) Priority: 30.12.2024 CN 202411975663
(71) Applicant: Beijing Voyager Technology Co., Ltd., 100094 Beijing (CN)
(72) Inventor: LI, Fanjie, Beijing, 100094 (CN); ZHANG, Huanming, Beijing, 100094 (CN)
(74) Representative: Marks & Clerk LLP

(57) **Abstract**

A redundant system (124), a device, a storage medium and a program product for an autonomous vehicle are provided. The method includes: a first computing unit (210) and a corresponding first bus communication unit (230); a second computing unit (220) and a corresponding second bus communication unit (240). The first computing unit (210) is connected to a set of sensors (130-2) specific to the redundancy system via the first bus communication unit (230), and the second computing unit (220) is connected to a set of sensors (130-2) via the second bus communication unit (240). In response to the redundancy system taking over the autonomous vehicle , a target computing unit of the first computing unit (210) and the second computing unit (220) is configured to generate a control signal for the autonomous vehicle based on perception data from the set of sensors (130-2).

## Description

### FIELD

Example embodiments of the present disclosure generally relate to the field of computers, and in particular, to a redundant system, a device, a computer-readable storage medium, and a computer program product for an autonomous vehicle.

### BACKGROUND

With the rapid development of automated driving technology, autonomous vehicles are capable of achieving fully autonomous driving without human intervention. In this technology, the reliability indices of the automated driving system appear particularly important.

However, the reliability of current automated driving systems remains to be improved.

### SUMMARY

In a first aspect of the present disclosure, a redundant system for an autonomous vehicle is provided. The system includes a first computing unit and a first bus communication unit corresponding to the first computing unit; and a second computing unit and a second bus communication unit corresponding to the second computing unit. The first computing unit is connected to a set of sensors specific to the redundancy system via the first bus communication unit, and the second computing unit is connected to the set of sensors via the second bus communication unit. In response to the redundancy system taking over the autonomous vehicle, a target computing unit of the first computing unit and the second computing unit is configured to generate a control signal for the autonomous vehicle based on perception data from the set of sensors.

In a second aspect of the present disclosure, an electronic device is provided. The device includes a memory and a processor. The memory is configured to store one or more computer instructions, and the one or more computer instructions are executed by the processor to implement the redundancy system according to the first aspect of the present disclosure.

In a third aspect of the present disclosure, a computer-readable storage medium is provided. The computer-readable storage medium has a computer program stored thereon, and the computer program is executable by a processor to implement the redundancy system of the first aspect.

In a fourth aspect of the present disclosure, a computer program product is provided. The computer program product includes computer-executable instructions that, when executed by a processor, implement the redundant system of the first aspect.

It should be understood that the content described in this summary section of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 illustrates a schematic diagram of an example environment in which embodiments of the present disclosure may be implemented;
FIG. 2 illustrates a system block diagram of a redundant system of an example vehicle according to some embodiments of the present disclosure; and
FIG. 3 illustrates a block diagram of a device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as being limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with any other embodiment described in the same section/subsection and/or different sections/subsections.

In the description of the embodiments of the present disclosure, the terms "including" and the like should be understood as an open-ended inclusion, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first", "second", and the like may refer to different or identical objects. Other explicit and implicit definitions may also be included below.

Embodiments of the present disclosure may relate to data of a user, acquisition and/or use of data, and the like. These aspects all follow corresponding laws and regulations and related provisions. In the embodiments of the present disclosure, all data is collected, obtained, processed, treated, forwarded, used, etc., on the premise that the user has been informed and has given explicit confirmation. Accordingly, when implementing the embodiments of the present disclosure, types, usage scopes, usage scenarios, and the like of data or information that may be involved should be notified to the user and the authorization of the user may be obtained in an appropriate manner according to the relevant laws and regulations. The specific notification and/or authorization manner may vary according to actual situations and application scenarios, and the scope of the present disclosure is not limited in this regard.

Regarding solutions in the present specification and the embodiments, if personal information processing is involved, the processing may be performed on the premise of having a legality basis (for example, obtaining consent of a personal information subject, or the necessity for fulfilling a contract), and may be performed only within a specified or agreed range. The users may refuse to process personal information other than necessary information required by the basic functions, without affecting their use of those basic functions.

As briefly mentioned above, autonomous vehicles are capable of achieving fully autonomous driving without human intervention. During automated driving of an autonomous vehicle, whether the autonomous vehicle can be driven safely depends on the reliability of the automated driving system. That is, the higher the reliability of the automated driving system, the higher the safety level of the autonomous vehicle. However, the reliability of current automated driving systems remains to be improved.

Embodiments of the present disclosure provide a redundant system for an autonomous vehicle. The system includes a first computing unit and a first bus communication unit corresponding to the first computing unit; and a second computing unit and a second bus communication unit corresponding to the second computing unit. The first computing unit is connected to a set of sensors specific to the redundancy system via the first bus communication unit, and the second computing unit is connected to the set of sensors via the second bus communication unit. In response to the redundancy system taking over the autonomous vehicle, a target computing unit of the first computing unit and the second computing unit is configured to generate a control signal for the autonomous vehicle based on perception data from the set of sensors.

In this way, the embodiments of the present disclosure can generate, when the redundant system takes over the autonomous vehicle, the control signal for the autonomous vehicle by using the first computing unit or the second computing unit based on the perception data acquired by an independent set of sensors. By adopting the first computing unit and the second computing unit, the control of the autonomous vehicle can be ensured, and the reliability of the automated driving system.

Various example implementations of this solution are described in detail below in conjunction with the accompanying drawings.

### EXAMPLE ENVIRONMENT

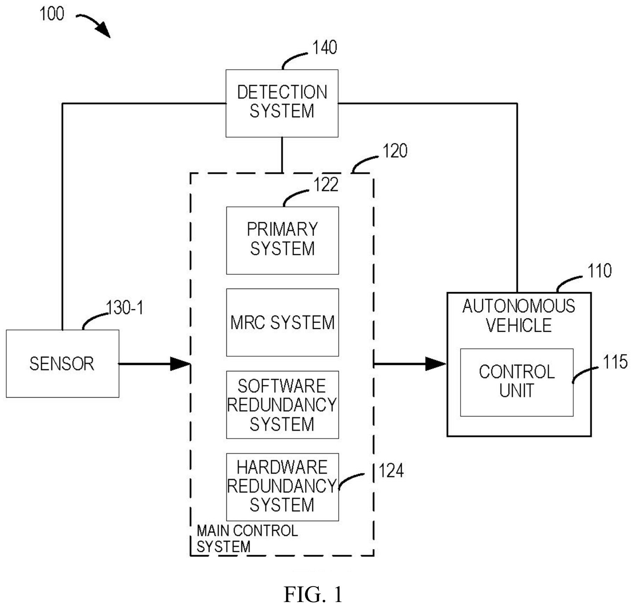

FIG. 1 illustrates a schematic diagram of an example environment 100 in which embodiments of the present disclosure may be implemented. As shown in FIG. 1, the example environment 100 may include an autonomous vehicle 110 and a main control system 120 for controlling the autonomous vehicle 110.

In some embodiments, the autonomous vehicle 110 may provide the main control system 120 based on a device such as a local vehicle head unit. The autonomous vehicle 110 may utilize a set of sensors 130-1 configured thereon to obtain perception data of a physical environment in which the autonomous vehicle 110 is located. As an example, the set of sensors 130-1 may include, for example, a camera, a radar, and the like. Further, the autonomous vehicle 110 may send the perception data to the main control system 120, to enable control of the autonomous vehicle 110 with the main control system 120. For example, the main control system 120 may make decisions based on the perception data sent by the autonomous vehicle 110 to output control signals, and control motion of the autonomous vehicle 110 by using control information such as control instructions. For example, the main control system 120 may generate a trajectory of the autonomous vehicle 110 based on a position of an obstacle in the physical environment captured by the camera, and control the autonomous vehicle 110 to travel according to the trajectory, to implement the automated driving function of the autonomous vehicle 110.

As shown in FIG. 1, in some embodiments, the main control system 120 may include a primary system 122, an MRC risk minimization system, a software redundancy system, and a hardware redundancy system 124. The primary system 122 may be configured to implement the foregoing functions. When a detection system 140 of the autonomous vehicle 110 detects that there is a fault in the autonomous vehicle 110, a system capable of taking over the autonomous vehicle 110 may be determined from the main control system 120 depending on a type of fault and an impact resulting therefrom. As an example, systems taking over the autonomous vehicle 110 are, in descending order of priority, as follows: an MRC risk minimization system, a software redundancy system, and a hardware redundancy system 124.

For example, when the detection system 140 detects that there is a fault in the primary system 122, the fault affects both the MRC risk minimization system and the software redundancy system, at which time the autonomous vehicle 110 is taken over by the hardware redundancy system 124. In a specific example, when the primary system 122 normally controls the autonomous vehicle 110 to travel, a wiring harness associated with a chassis is loosened, so that a node in communication with the chassis of the autonomous vehicle 110 cannot transmit a control signal of the primary system 122 to the autonomous vehicle 110. The detection system 140 detects the fault, and determines, based on a classification of the fault, that both the MRC risk minimization system and the software redundancy system cannot take over the autonomous vehicle 110. Therefore, the autonomous vehicle 110 is taken over by the hardware redundancy system 124 at this time. In another specific example, when the primary system 122 normally controls the autonomous vehicle 110 to travel, a problem of positioning offset may occur. The detection system 140 detects the fault, and determines, based on the classification of the fault, that both the MRC risk minimization system and the software redundancy system need to utilize attitude information output by a positioning system for planning control. Therefore, the autonomous vehicle 110 can be taken over only by the hardware redundancy system 124 at this time.

For another example, after the autonomous vehicle 110 has collided, if the detection system 140 detects a specific fault, the fault renders all the primary system 122, the MRC risk minimization system and the software redundancy system unable to control the autonomous vehicle 110, and at this time, the hardware redundancy system 124 takes over the autonomous vehicle 110.

In some scenarios, the hardware redundancy system 125 may also be triggered to take over the autonomous vehicle under other suitable conditions depending on the specific involvement of the automated driving system.

In some embodiments, the autonomous vehicle 110 may include a control unit 115. When the main control system 120 sends a control signal, the control signal may be received by the control unit 115. In response to the control unit 115 receiving the control signal, the control unit 115 may control the autonomous vehicle 110 to perform an action related to the control signal.

It should be understood that structures and functions of various elements in the environment 100 are described for illustrative purposes only and do not imply any limitation to the scope of the present disclosure.

Some example embodiments of the present disclosure will be described below with continued reference to the accompanying drawings.

### EXAMPLE REDUNDANCY SYSTEM

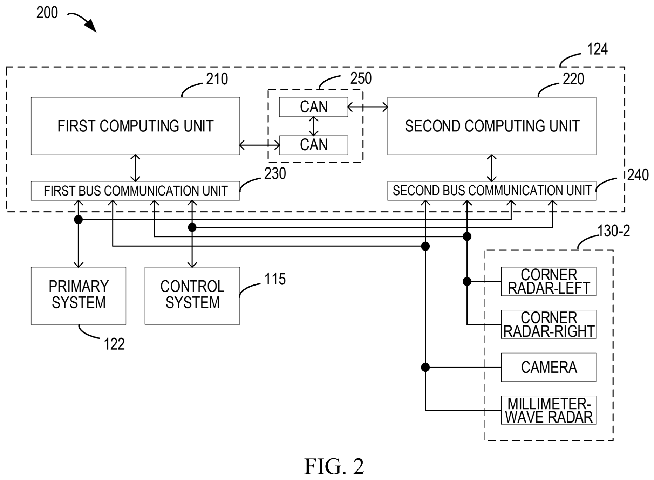

FIG. 2 illustrates a system block diagram of an architecture 200 of a redundant system of an example vehicle according to some embodiments of the present disclosure. It should be understood that the redundant system herein is the hardware redundancy system 124 as mentioned above. As shown in FIG. 2, the hardware redundancy system 124 may include a first computing unit 210, a second computing unit 220, a first bus communication unit 230, and a second bus communication unit 240.

In some embodiments, the first computing unit 210 is connected to a set of sensors 130-2 specific to the redundant system, a third computing unit of the autonomous vehicle 110, and the control unit 115 via the first bus communication unit 230. The second computing unit 220 is connected to the set of sensors 130-2, the third computing unit, and the control unit 115 via the second bus communication unit 240.

In some embodiments, the set of sensors 130-2, distinct from the set of sensors 130-1, is a set of sensors independent of the primary system 122, and may be configured to acquire perception data in a travelling environment of the autonomous vehicle 110. The set of sensors 130-2 may be mounted on the autonomous vehicle 110. The set of sensors 130-2 may act as a set of redundant sensors. When a fault occurs in the set of sensors 130-1, the perception data is acquired by the set of sensors 130-2, so that the hardware redundancy system 124 can control the autonomous vehicle 110 to travel normally.

In some embodiments, the set of sensors 130-2 may include, but is not limited to, a camera, a millimeter wave radar, and a corner radar. The camera, the millimeter wave radar and the corner radar may be provided in plural according to actual situations. A plurality of cameras, a plurality of millimeter wave radars, and a plurality of corner radars may be used, for example, to acquire perception data of different orientations. As an example, one camera may be provided, one millimeter wave radar may be provided, and two corner radars may be provided. Correspondingly, the camera may be a forward-facing camera; the millimeter wave radar may be a forward-facing millimeter wave radar; and the corner radar may be a left rear corner radar and a right rear corner radar.

Specifically, perception data acquired by the forward-facing camera may include, but is not limited to, lane line information, road edge information, traffic light information, stop line information, speed limit sign information, and target information related to traffic participants. As an example, the traffic participants may include targets of appropriate types in the traffic environment, e.g., different types of vehicles, pedestrians, animals, and the like.

By analyzing the lane line information and the road edge information, the system controlling the autonomous vehicle 110 may implement lateral control of the autonomous vehicle 110, which may specifically enable the autonomous vehicle 110 to travel along a center of a lane.

By analyzing the target information, the system controlling the autonomous vehicle 110 may predict whether the autonomous vehicle 110 will have a forward collision. As an example, before the target information is analyzed, operations such as processing, screening, and the like may be performed on the target information, so as to more accurately predict the forward collision. In some embodiments, the target information may also be fused with the perception data acquired by the radar.

By analyzing the traffic light information, the stop line information and the speed limit sign information, the system controlling the autonomous vehicle 110 may control the autonomous vehicle 110 to avoid a phenomenon of running red lights or overspeed.

By analyzing the perception data as mentioned above, a drivable area of the autonomous vehicle 110 may also be determined. The drivable area may assist the system controlling the autonomous vehicle 110 in performing lateral control of the autonomous vehicle 110 and in predicting forward collision.

The perception data acquired by the forward-facing millimeter wave radar may include, but is not limited to, target information related to traffic participants, and state information related to automatic emergency braking system. The state information related to the automatic emergency braking system may be, for example, a triggering state of the automatic emergency braking system, a deceleration after the automatic emergency braking system is triggered, a target number of the automatic emergency braking system, and the like. By analyzing the target information, the system controlling the autonomous vehicle 110 may predict whether the autonomous vehicle 110 will have a forward collision. As an example, before the target information is analyzed, operations such as processing, screening and the like may be performed on the target information, so as to more accurately predict the forward collision. In some embodiments, the target information may also be fused with the perception data acquired by the forward-facing camera. As an example, the perception data acquired by the forward-facing camera may be sent to forward-facing millimeter wave radar for fusion processing while being sent to the first computing unit 210 and the second computing unit 220, and then the fused target information and the state information related to the automatic emergency braking system are sent to the first computing unit 210 and the second computing unit 220 by the forward-facing millimeter wave radar.

The perception data acquired by the left rear corner radar and the right rear corner radar may include, but is not limited to, target information related to traffic participants. By analyzing the target information, the system controlling autonomous processing may determine the risk of a rear-end collision occurring from behind.

In some embodiments, the third computing unit may be a primary system 122 for controlling the autonomous vehicle 110 in general. For example, where the primary system 122 consists of a plurality of subsystems that may be used to control the autonomous vehicle 110, if each subsystem is in a state that it may be used (e.g., a non-faulty state), the primary system 122 will be used to generate a control signal for the autonomous vehicle 110 and control the autonomous vehicle 110 accordingly.

In some embodiments, the control signal generated by the primary system 122 may be directly sent to the control unit 115 of the autonomous vehicle 110, or may be sent to the control unit 115 in a forwarding manner. As an example, the main control system 122 may send a control signal to the first computing unit 210 or the second computing unit 220 through the first bus communication unit 230 or the second bus communication unit 240, and then forward the control signal to the control unit 115 of the autonomous vehicle 110 through the first computing unit 210 or the second computing unit 220, to implement communication between the primary system 122 and the control unit 115. Accordingly, state data of the autonomous vehicle 110 during travelling may also be forwarded to the primary system 122 via the first computing unit 210 or the second computing unit 220.

In some embodiments, the first computing unit 210 may be used to generate a control signal for the autonomous vehicle 110 based on the perception data from the set of sensors 130-2. As an example, the process of the first computing unit 210 generating the control signal for the autonomous vehicle 110 based on the perception data may be: the first computing unit 210 first determining vehicle environment information based on the perception data, and then generating the control signal based on the vehicle environment information. The vehicle environment information may, for example, indicate a risk that the autonomous vehicle 110 is currently experiencing a forward collision or a backward collision.

In some embodiments, the second computing unit 220 may be used to generate a control signal for the autonomous vehicle 110 based on the perception data from the set of sensors 130-2. As an example, the process of the second computing unit 220 generating a control signal for the autonomous vehicle 110 based on the perception data may be: the second computing unit 220 first determining vehicle environment information based on the perception data, and then generating the control signal based on the vehicle environment information.

In some embodiments, both the first computing unit 210 and the second computing unit 220 may include a plurality of first processing cores and a plurality of second processing cores. The first processing core has a performance different from that of the second processing core. For example, a computing power of the first processing core may be higher than a computing power of the second processing core, but a safety level of the first processing core is lower than that of the second processing core.

As an example, a plurality of first processing cores that have higher computing power may be configured to determine vehicle environment information based on the perception data, or may be configured to process some tasks with lower reliability requirements, such as acquiring data. Specifically, the plurality of first processing cores may, for example, run a linux system to improve the development efficiency and the iteration efficiency.

The plurality of second processing cores with higher safety level may be used to generate the control signal based on vehicle environment information, or may be used to deploy algorithms that are safety-related to the autonomous vehicle 110. Specifically, the plurality of second processing cores may run an autosar cp system, for example, to ensure the reliability and real-time performance of the hardware redundancy system 124.

By providing the first computing unit 210 and the second computing unit 220, and communicatively connecting the first computing unit 210 and the second computing unit 220 with the primary system 122 and the control unit 115 of the autonomous vehicle 110, respectively, the problem that the computing unit cannot send a control signal under the condition of only one computing unit can be avoided. This improves the reliability of the hardware redundancy system 124.

It should be understood that, during travelling of the autonomous vehicle 110, although both the first computing unit 210 and the second computing unit 220 are in a real-time running state, only one of the computing units essentially performs data and information interaction with the primary system 122 and the control unit 115 of the autonomous vehicle 110. The computing unit is a target computing unit.

In some embodiments, the target computing unit may be pre-designated. For example, in an example, any one of the first computing unit 210 and the second computing unit 220 may be designated as the target computing unit. In another example, the first computing unit 210 and the second computing unit 220 may be divided according to a master-slave working mode. In this case, a primary computing unit of the first computing unit 210 and the second computing unit 220 may be used as the target computing unit.

In some embodiments, the target computing unit may play a different role at different stages of travelling of the autonomous vehicle 110. The target computing unit is further described below with reference to different scenarios.

In some embodiments, when the primary system 122 controls the autonomous vehicle 110, a control signal of the autonomous vehicle 110 sent by the primary system 122 may be sent to the target computing unit via a bus communication unit corresponding to the target computing unit. The received control signal is then forwarded by the target computing unit to the control unit 115 of the autonomous vehicle 110, thereby enabling control of the autonomous vehicle 110.

At the stage of controlling the autonomous vehicle 110 by the primary system 122, the target computing unit may establish communication between the primary system 122 and the control unit 115. Herein, forwarding the state data sent by the control unit 115 to the primary system 122 may be also included.

In some embodiments, the autonomous vehicle 110 may be taken over by the hardware redundancy system 124 when a fault or a collision of the autonomous vehicle 110 occurs and the primary system 122, the MRC risk minimization system, and the software redundancy system are unable to take over. At this time, the target computing unit may stop forwarding the control signal from the main system 122 to the control unit 115. The target computing unit may further generate the control signal to control the autonomous vehicle 110. As an example, the target computing unit may generate a control signal of the autonomous vehicle 110 based on the perception data from the set of sensors 130-2, and then send the control signal to the control unit 115. Specifically, the vehicle environment information may be determined based on the perception data by the plurality of first processing cores in the target computing unit, and then the control signal of the autonomous vehicle 110 may be generated by the plurality of second processing cores in the target computing unit based on the vehicle environment information. Additionally, the target computing unit may generate the control signal, for example, in conjunction with a detection result of the detection system 140 and a fault processing strategy made by the primary system 122.

For example, when the primary system 122 normally controls the autonomous vehicle 110 to travel, a wiring harness associated with a chassis is loosened, so that a node in communication with the chassis of the autonomous vehicle 110 cannot transmit a control signal of the primary system 122 to the autonomous vehicle 110. The detection system 140 detects the fault, and determines, based on a classification of the fault, that both the MRC risk minimization system and the software redundancy system cannot take over the autonomous vehicle 110. At this point, the autonomous vehicle 110 is taken over by the hardware redundancy system 124. Through the perception data acquired by the set of sensors 130-2, the target computing unit may determine that the current lane line is clear, and an attitude of the autonomous vehicle 110 is relatively aligned. Based on this, the target computing unit sends a control signal to the control unit 115 to control the autonomous vehicle 110 to stop in this lane.

For another example, when the primary system 122 normally controls the autonomous vehicle 110 to travel, a problem of positioning offset occurs. The detection system 140 detects the fault, and determines, based on the classification of the fault, that both the MRC risk minimization system and the software redundancy system need to utilize attitude information output by a positioning system for planning control. Therefore, the autonomous vehicle 110 can be taken over only by the hardware redundancy system 124 at this time. After the hardware redundancy system 124 takes over the autonomous vehicle 110, through the perception data acquired by the set of sensors 130-2, the target computing unit may determine that the current lane line is clear, and the autonomous vehicle 110 deviates from the lane. Based on this, the target computing unit sends a control signal to the control unit 115 to control the autonomous vehicle 110 to perform an emergency brake.

In some embodiments, while the target computing unit controls the autonomous vehicle 110, the target computing unit may still receive the data and information sent by the primary system 122 and the state data sent by the control unit 115, and forward the state data of the control unit 115 to the primary system 122.

In some embodiments, the aforementioned control signal may be used to control stopping of the autonomous vehicle 110.

In some embodiments, when the target computing unit takes over the autonomous vehicle 110 such that the autonomous vehicle 110 is traveling normally, for a sudden event that some target computing units cannot respond quickly, the target computing unit may enable the control unit 115 to send a braking control signal. The braking control signal may be, for example, an immediate-stop signal or a rapid-stop signal. As an example, in response to the hardware redundancy system 124 receiving an emergency-stop instruction, the target computing unit may generate a braking control signal for the autonomous vehicle 110.

In some embodiments, the emergency-stop instruction may be generated via a remote system of the autonomous vehicle 110 detecting a target risk. Specifically, in a process of the autonomous vehicle 110 travelling, if the remote system detects that the target risk exists currently in the autonomous vehicle 110, the remote system may send an emergency-stop instruction to the hardware redundancy system 124. In response to the target computing unit receiving the emergency-stop instruction, the target computing unit may generate a braking control signal to enable the emergency brake of the autonomous vehicle 110.

As an example, when the primary system 122 normally controls the autonomous vehicle 110 to travel, a problem of positioning offset occurs. The detection system 140 detects the fault, and determines, based on the classification of the fault, that both the MRC risk minimization system and the software redundancy system need to utilize attitude information output by a positioning system for planning control. Therefore, the autonomous vehicle 110 can be taken over only by the hardware redundancy system 124 at this time. After the hardware redundancy system 124 takes over the autonomous vehicle 110, through the perception data acquired by the set of sensors 130-2, the target computing unit may determine that the current lane line is clear, and an attitude of the autonomous vehicle 110 is relatively aligned. Based on this, the target computing unit sends a control signal to the control unit 115 to control the autonomous vehicle 110 to stop in the lane. During stopping of the autonomous vehicle 110, the remote system detects that the autonomous vehicle 110 is too close to the road edge. At this time, the remote system issues an emergency stop instruction to the hardware redundancy system 124. After receiving the emergency stop instruction, the target computing unit sends a braking control signal to the control unit 115 to control the autonomous vehicle 110 to perform an emergency stop.

In some embodiments, the emergency stop instruction may also be generated via an emergency stop button of the autonomous vehicle 110 being triggered. Specifically, during the travelling of the autonomous vehicle 110, if a tester or a passenger finds that the autonomous vehicle 110 may be at risk, the tester or the passenger may bring the autonomous vehicle 110 to an emergency stop by triggering the emergency stop button in the autonomous vehicle 110. When the emergency stop button is triggered, the target computing unit receives the emergency stop instruction, and sends a braking control signal to the control unit 115 to control the autonomous vehicle 110 to perform an emergency stop.

In a scenario in which the first computing unit 210 and the second computing unit 220 are used to enable the main system 122 to be communicated with the control unit 115, by providing the first computing unit 210 and the second computing unit 220, the fault that the primary system 122 and the control unit 115 cannot communicate therebetween due to looseness of the wiring harness can be avoided during travelling of the autonomous vehicle 110.

In some embodiments, the target computing unit may be re-designated when the target computing unit cannot enable the primary system 122 to communicate with the control unit 115. The reason that the primary system 122 cannot communicate with the control unit 115 may be, for example, that the wiring harness used to communicatively connect the primary system 122 and the target computing unit is loosened, or may be that there is a fault in the target computing unit.

As an example, when the target computing unit does not receive a message sent by the primary system 122 within a predetermined time period, a new target computing unit may be re-designated from the first computing unit 210 and the second computing unit 220. Specifically, a computing unit capable of maintaining communication with the primary system 122 in the first computing unit 210 and the second computing unit 220 may be designated as a new target computing unit. The message sent by the primary system 122 may be, for example, a heartbeat message.

As shown in FIG. 2, in a specific example, the process of re-determining the target computing unit may be: when the target computing unit does not receive a message sent by the primary system 122 within a predetermined time period, sending, by the target computing unit, a takeover request to another computing unit through the bus communication unit 250, to request the computing unit as the target computing unit. After receiving the takeover request, the computing unit serves as a new target computing unit, so that the primary system 122 and the control unit 115 can communicate normally. For example, two bus communication units 250 may be provided, i.e., corresponding to the first computing unit 210 and the second computing unit 220, respectively.

It should be understood that, although the primary system 122 and the control unit 115 may communicate normally by re-designating the target computing unit, the main control system 120 already has a fault or a potential fault. In order to ensure the driving safety of the autonomous vehicle 110, after the target computing unit is re-determined, the new target computing unit may generate a braking control signal, and send the braking control signal to the control unit 115 to control the autonomous vehicle 110 to stop.

In some embodiments, the first bus communication unit 230 may allow transmission and exchange of data and information between the set of sensors 130-2, the primary system 122, and the control unit 115 and the first computing unit 210. Specifically, the first bus communication unit 230 may transmit the perception data acquired by the set of sensors 130-2 to the first computing unit 210, transmit the control signal of the primary system 122 to the first computing unit 210, transmit the control signal of the first computing unit 210 to the control unit 115, and transmit the state data of the control unit 115 to the first computing unit 210 and the primary system 122.

In some embodiments, the second bus communication unit 240 may allow transmission and exchange of data and information between the set of sensors 130-2, the primary system 122, and the control unit 115 and the second computing unit 220. Specifically, the second bus communication unit 240 may transmit the perception data acquired by the set of sensors 130-2 to the second computing unit 220, transmit the control signal of the primary system 122 to the second computing unit 220, transmit the control signal of the second computing unit 220 to the control unit 115, and transmit the state data of the control unit 115 to the second computing unit 220 and the primary system 122.

### EXAMPLE DEVICE

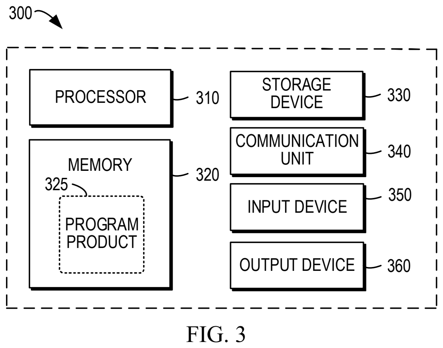

FIG. 3 illustrates a block diagram of a computing device 300 in which one or more embodiments of the present disclosure may be implemented. It should be understood that the computing device 300 shown in FIG. 3 is merely illustrative and should not constitute any limitation on the functionality and scope of the embodiments described herein. The computing device 300 shown in FIG. 3 may be used to implement the hardware redundancy system 124 of FIG. 1.

As shown in FIG. 3, the computing device 300 is in the form of a general-purpose computing device. Components of the computing device 300 may include, but are not limited to, one or more processors or processing units 310, a memory 320, a storage device 330, one or more communication units 340, one or more input devices 350, and one or more output devices 360. The processing unit 310 may be an actual or virtual processor and capable of performing various processes according to programs stored in the memory 320. In a multiprocessor system, a plurality of processing units execute computer-executable instructions in parallel to improve the parallel processing capability of the computing device 300.

The computing device 300 typically includes a plurality of computer storage media. Such media may be any available media accessible by the computing device 300, including, but not limited to, volatile and non-volatile media, removable and non-removable media. The memory 620 may be volatile memory (e.g., a register, a cache, random access memory (RAM)), non-volatile memory (e.g., read-only memory (ROM), electrically erasable programmable read-only memory (EEPROM), flash memory), or some combination thereof. The storage device 330 may be a removable or non-removable medium and may include a machine-readable medium, such as a flash drive, a magnetic disk, or any other medium, which may be capable of storing information and/or data (e.g., training data for training) and may be accessed within the computing device 300.

The computing device 300 may further include additional removable/non-removable, volatile/non-volatile storage media. Although not shown in FIG. 3, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 320 may include a computer program product 325 having one or more program modules configured to perform various methods or actions of various embodiments of the present disclosure.

The communication unit 340 implements communications with other computing devices through a communication medium. Additionally, the functionality of components of the computing device 300 may be implemented in a single computing cluster or multiple computing machines capable of communicating through a communication connection. Thus, the computing device 300 may operate in a networked environment using logical connections with one or more other servers, a network personal computer (PC), or another network node.

The input device 350 may be one or more input devices, such as a mouse, a keyboard, a trackball, or the like. The output device 360 may be one or more output devices, such as a display, a speaker, a printer, or the like. The computing device 300 may also communicate with one or more external devices (not shown) as needed, the external device such as a storage device, a display device, etc., communicates with one or more devices that enable a user to interact with the computing device 300, or communicates with any device (e.g., a network card, a modem, etc.) that enables the computing device 300 to communicate with one or more other computing devices. Such communication may be performed via an input/output (I/O) interface (not shown).

According to example implementations of the present disclosure, there is provided a computer-readable storage medium having computer-executable instructions stored thereon, where the computer-executable instructions are executed by a processor to implement the method described above. According to example implementations of the present disclosure, a computer program product is further provided. The computer program product is tangibly stored on a non-transitory computer-readable medium and includes computer-executable instructions, and the computer-executable instructions are executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart(s) and/or block diagram(s), and combination(s) of blocks in the flowchart(s) and/or block diagram(s), may be implemented by computer readable program instructions.

These computer-readable program instructions may be provided to a processing unit of a general purpose computer, special purpose computer, or other programmable data processing apparatus to produce a machine, such that the instructions, when executed by the processing unit of the computer or other programmable data processing apparatus, produce means to implement the functions/acts specified in one or more blocks in the flowchart(s) and/or block diagram(s). These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in one or more blocks in the flowchart(s) and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in one or more blocks in the flowchart(s) and/or block diagram(s).

The flowcharts and block diagrams in the figures show architecture, functionality, and operation of possible implementations of systems, methods, and computer program products according to various implementations of the present disclosure. In this regard, each block in the flowchart(s) or block diagram(s) may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagram(s) and/or flowchart(s), as well as combination(s) of blocks in the block diagram(s) and/or flowchart(s), may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A redundant system (124) for an autonomous vehicle (110), comprising:
a first computing unit (210) and a first bus communication unit (230) corresponding to the first computing unit (210); and
a second computing unit (220) and a second bus communication unit (240) corresponding to the second computing unit (220);
wherein the first computing unit (210) is connected to a set of sensors (130-2) specific to the redundancy system via the first bus communication unit (230), and the second computing unit (220) is connected to the set of sensors (130-2) via the second bus communication unit (240); and
wherein, in response to the redundant system (124) taking over the autonomous vehicle (110), a target computing unit of the first computing unit (210) and the second computing unit (220) is configured to generate a control signal for the autonomous vehicle (110) based on perception data from the set of sensors (130-2).

2. The system (124) of claim 1, wherein the first computing unit (210) is further connected to a third computing unit of the autonomous vehicle (110) and a control unit (115) of the autonomous vehicle (110) via the first bus communication unit (230), and the second computing unit (220) is further connected to the third computing unit and the control unit (115) via the second bus communication unit (240), the third computing unit corresponding to a primary system of the autonomous vehicle (110).

3. The system (124) of claim 2, wherein:
in response to the primary system being configured to control the autonomous vehicle (110), at least one of the first computing unit (210) or the second computing unit (220) is configured to forward a control signal from the third computing unit to the control unit (115).

4. The system (124) of claim 2, wherein:
in response to the redundant system (124) taking over the autonomous vehicle (110), at least one of the first computing unit (210) or the second computing unit (220) is configured to cease forwarding a control signal from the third computing unit to the control unit (115).

5. The system (124) of claim 2, wherein:
in response to the redundant system (124) taking over the autonomous vehicle (110), the target computing unit is configured to transmit a control signal generated by the target computing unit to the control unit (115).

6. The system (124) of claim 2, wherein:
in response to the redundant system (124) taking over the autonomous vehicle (110), at least one of the first computing unit (210) or the second computing unit (220) is configured to forward state data from the control unit (115) to the third computing unit.

7. The system (124) of claim 1, wherein the first computing unit (210) and the second computing unit (220) are further configured to be connected via a bus communication unit.

8. The system (124) of claim 1, wherein the set of sensors (130-2) comprises at least one of: a camera, a millimeter wave radar, and a corner radar.

9. The system (124) of claim 1, wherein the control signal is configured to control stopping of the autonomous vehicle (110).

10. An electronic device, comprising:
a memory (320) and a processor (310);
wherein the memory (320) is configured to store one or more computer instructions, and the one or more computer instructions are executed by the processor (310) to implement the redundancy system (124) of any one of claims 1 to 9.

11. A computer-readable storage medium having a computer program stored thereon, wherein the computer program is executable by a processor to implement the redundant system (124) of any one of claims 1 to 9.

12. A computer program product comprising computer-executable instructions, wherein the computer-executable instructions, when executed by a processor, implement the redundant system (124) of any one of claims 1 to 9.
